# EUROPÄISCHE PATENTSCHRIFT

(11) **EP 2 268 972 B1**
(45) Veröffentlichungstag und Bekanntmachung des Hinweises auf die Patenterteilung: **17.10.2012**
(21) Anmeldenummer: 09731441.3
(22) Anmeldetag: 09.04.2009
(51) Int. Cl.: F22G 3/00

(54) **VORRICHTUNG ZUR ZUFUHR VON WASSERDAMPF ÜBER EINEN WÄRMETAUSCHER IN EINEN BRENNRAUM UND VERFAHREN**
DEVICE FOR FEEDING WATER STEAM VIA A HEAT EXCHANGER IN A COMBUSTION CHAMBER AND METHOD
DISPOSITIF D'ALIMENTATION EN VAPEUR D'EAU VIA UN ÉCHANGEUR DE CHALEUR DANS UNE CHAMBRE DE COMBUSTION, ET PROCÉDÉ ASSOCIÉ

(30) Priorität: 11.04.2008 DE 102008018664
(43) Veröffentlichungstag der Anmeldung: 05.01.2011
(73) Patentinhaber: BOTEC-Forschungs- und Entwicklungsgesellschaft mbH, 22525 Hamburg (DE)
(72) Erfinder: Bolkan, Eduard Alper, 23552 Lübeck (DE)
(74) Vertreter: Harlfinger, Jan Philipp
(86) Internationale Anmeldenummer: PCT/DE2009/000474
(87) Internationale Veröffentlichungsnummer: WO 2009/124538

(56) Entgegenhaltungen:
- EP-A1- 0 619 417
- EP-A2- 0 681 099
- WO-A1-2004/106718
- WO-A2-03/104635
- DE-A1- 3 925 795
- JP-A- 1 046 590
- US-A1- 2007 039 725

## Beschreibung

Gegenstand der Erfindung ist eine Vorrichtung zur Zufuhr von Wasserdampf über einen Wärmetauscher in einen Brennraum und ein Verfahren unter Verwendung der Vorrichtung.

Es ist bekannt, in eine Wärmekraftmaschine in die Brennräume Wasser bzw. Wasserdampf einzuspritzen. Beispiele für eine derartige Verfahrensweise sind die WO 03/104635 A2 (RGP ENGINEERING LLC), die EP 0619417 A1 (ISHIKAWAJIMA HARIMA HEAVY IND), die EP 0 681 099 A2 (ABB MANAGEMENT AG et al.) und die WO 2004/106718 A1 (EUROTURBINE AB et al.. Die Einspritzung von Wasser in den Brennraum von Dieselmotoren bewirkt z.B. die Reduktion von Stickoxiden und des Schwarzrauches. Im Weiteren ist bekannt, dass Wasserdampfzufuhr in den Verbrennungsraum die Energieeffizienz der eingesetzten Kraftstoffe erhöhen kann. Zur Erhitzung von Wasser und Überführen in die Dampfphase sind Rohrwärmetauscher vorgeschlagen worden. Die US 2007/039725 A1 schlägt hierfür z.B. einen Aufbau vor, wonach der Wasserdampfstrom einen Richtungswechsel erfährt und das wasserhaltige, zu erhitzende Medium nicht in jeder Mantelschicht beidseits von jeweils einer Mantelschicht enthaltend das Heißmedium kontaktiert wird.

Die vorliegende Erfindung hat es sich zur Aufgabe gemacht, eine besonders vorteilhafte Ausgestaltung zur Herstellung von erhitztem Wasserdampf zur Einspeisung in den Verbrennungsraum einer Wärmekraftmaschine zur Verfügung zu stellen.

Die Aufgabe ist gelöst durch den Gegenstand der unabhängigen Ansprüche. Vorteilhafte Ausgestaltungen sind Gegenstand der Unteransprüche oder nachfolgend beschrieben.

Brennräume wie sie zur Ausführung der Erfindung geeignet sind können Teil von Wärmekraftmaschinen oder auch von Heizungsbrennern sein. Wärmekraftmaschinen im Sinne der Erfindung sind Hubkolbenmotoren, wie z.B. Zweitakt-, Otto- und/oder Dieselmotoren. Daneben sind aber auch Dreh- und Kreiskolbenmotoren sowie Gasturbinen geeignet. Derartige Wärmekraftmaschinen oder Heizungsbrenner verfügen über eine Brennstoff- und eine Brennluftzufuhr (Ansaugluft) sowie über eine Abfuhr für heiße Verbrennungsgase (Abgase).

Geeignete Brennstoffe sind unter Wärmegewinn oxidierbare Stoffe. Beispiele sind Kohlenwasserstoffe und deren Derivate. Geeignete Derivate sind Pflanzenöle, Biodiesel, wie Ester von gesättigten oder ungesättigten Fettsäuren, insbesondere Methyl - und/oder Ethylester, oder Alkohole, wie Ethanol, Propanol oder Methanol.

Teil der erfindungsgemäßen Vorrichtung ist ein mehrwandiger Rohrwärmetauscher.

Nach einer Ausgestaltung weist der Wärmetauscher ein Innenrohr, ein inneres Mantelrohr und ein äußeres Mantelrohr auf. Die innere Mantelschale wird vom Innenrohr und dem inneren Mantelrohr gebildet, die äußere Mantelschale vom inneren und äußeren Mantelrohr. Das Innenrohr (erste Mantelschale) und die äußere Mantelschale des Rohrwärmetauschers sind jeweils vom heißen Abgas der Wärmekraftmaschine durchströmt. Die äußere Mantelschale ist nach außen gasdicht durch das äußere Mantelrohr abgegrenzt. In der inneren Mantelschale, einerseits gasdicht abgegrenzt vom Innenrohr, andererseits gasdicht abgegrenzt durch das innere Mantelrohr, ist das wasserdampfhaltige, gasförmige Medium geführt, so dass dieses vom Ansaugstutzen der Wärmekraftmaschine angesaugt wird. Vorzugsweise werden Innenrohr und äußeres Mantelrohr im Gleichstrom mit heißem Abgas durchströmt und das wasserdampfhaltige, gasförmige Medium im Gegenstrom eingeleitet.

Das wasserdampfhaltige, gasförmige Medium wird, tangential und insbesondere in einem Winkel von 45 bis 135° zur Strömungsrichtung im Wärmetauscher in Bezug auf die Laufrichtung des Wärmetauschers zugeführt, z.B. über einen Einlass mit größerem Querschnitt als das innere Mantelrohr zugeführt und unabhängig hiervon tangential über einen größeren Querschnitt abgeführt. Das Abgas wird vorzugsweise tangential zu- und/oder abgeführt, jeweils vorzugsweise über einen größeren Einlassquerschnitt.

Das Abgas erhitzt das wasserdampfhaltige, gasförmige Medium im Wärmetauscher auf eine Temperatur von über 550°C, vorzugsweise 600 bis 900°C, insbesondere 650 bis 800°C.

Besonders bevorzugt ist es, wenn die durch die tangentiale Zufuhr mit einem größeren Querschnitt geschaffene zyklische Verwirbelung gegenläufig ist. Das Abgas wird z.B. vorzugsweise rechtsdrehend im Wärmetauscher geführt und das wasserdampflialtige, gasförmige Medium linksdrehend (oder umgekehrt).

Bedenkt man, dass z:B. beim Otto-Verbrennungsmotor bei Öffnung des Auslassventils das Gas eine Ausströmgeschwindigkeit von bis zu ca. 2000 km/h hat und man diese Gase unmittelbar am Abgasflansch in Tangentialbahnen führt, kann man sich die enorme zyklische Verwirbelung vorstellen.

Die abgasführende(n) Mantelschale(n) umschließt(en) die in der Mitte liegende und mit der Ansaugseite der Brennkammer verbundene innere Mantelschale für beide Wärmetauschertypen mit dem wasserdampfhaltigen, gasförmigen Medium von beiden Seiten. Der Wärmetausch vollzieht sich über beide Austauschflächen besonders effektiv.

Die Zuführung des wasserdampfhaltigen gasförmigen Mediums zum Motor erfolgt in den Ansaugbereich für die Verbrennungsluft, vorteilhaft durch ein Venturiflansch mit Schlitzen an einer engeren Stelle, insbesondere an der engsten Stelle. Hier können mit dem wasserdampfhaltigen gasförmigen Medium auch gleichzeitig weitere Brennstoffe vorteilhaft zugeführt werden.

Die Austauschflächen der Mantelschalen weisen vorteilhafterweise auf der äußeren und/oder der inneren Austauschfläche Unebenheiten in Form von Vertiefungen und/oder Ausbuchtungen in beliebigen geometrischen Formen auf, z.B. umlaufende Sicken, S-förmig, geradlinig, schneckenförmige Ausnehmungen, zylindrisch, konisch, zylindrisch mit konischer Senkung, kugel- oder halbkugelförmig. Die in das Material eingebrachten Vertiefungen und/oder Ausbuchtungen dienen der Vergrößerung der Oberfläche für den Wärmetausch, haben aber auch fluidtechnische Bedeutung, weil sie die Gasströme so lenken sollen, dass diese verwirbelt werden, vorzugsweise konzentrisch um die Achse des Wärmetauschers. Hierbei können auch Mikrowirbelbildungen erfolgen, wie sie z.B. durch die Nanoperforierung des Materials hervorgerufen wird.

Besonders geeignet ist eine Mikro- oder Nanoperforierung. Mikro- oder Nanoperforierung kann durch Laserbehandlung in das Material eingebracht werden. Der Wärmetauscher und dessen Wandungen sind vorzugsweise aus Edelstahl, Glas, Aluminium, Messing und/oder aus Kupfer hergestellt.

Das wasserdampfhaltige, gasförmige Medium wird somit großer Hitze ausgesetzt und erwärmt, wobei die Ansaugluftzufuhr gleichzeitig einen Unterdruck erzeugt, wodurch der Siedepunkt herabgesetzt wird. Weiterhin erfährt das Gasgemisch eine starke Scherung durch das tangentiale Einströmen, verbunden ggf. mit der oben beschriebenen Materialbearbeitung.

Ohne an die Theorie gebunden sein zu wollen, wird weiterhin vermutet, dass durch die Gegenläufigkeit der heißen und kalten Gasströme elektrostatische/elektromagnetische Felder erzeugt werden, welche ionisierend und/oder polarisierend wirken.

Darüber hinaus wirken die tangential geführten, turbulenten Luftströme selbstreinigend und wirken einer Verstopfung des Wärmetauschers entgegen.

Das wasserdampfhaltige, gasförmige Medium kann z.B. aus Wasser, das bei der Verbrennung entsteht im hinteren Bereich kurz vor dem Ausgang der Abgasanlage durch Kondensation gewonnen werden. Hierzu kann das Abgas, z.B. durch ein mehrstufiges Prallblechlabyrinth, abgekühlt werden, um Wasser zu kondensieren, und das Wasser mittels einer Flüssigkeitspumpe nach zum Verdampfer oder einem Wasserzwischenspeicher geführt werden. Hierdurch wird die Vorrichtung autark von der Zufuhr von Wasser von außen. Das überschüssige, dampfdestillierte und aufgereinigte Wasser kann ohne Probleme an die Umwelt abgegeben werden.

Der weitere Bestandteil der Erfindung ist die Behandlung der eingesetzten Wässer, ggf. auch anderer eingesetzter Fluida oder Gase (wie z.B. Kohlenwasserstoffe) mit Permanentmagnetfeldern und/oder elektromagnetischen Feldern.

Hierzu werden die Flüssigkeiten und Dämpfe (getrennt oder gemeinsam) im Betrieb innerhalb des Kreislaufs durch Spalten, Kanäle und/oder Röhren von Permanent- und oder Elektromagneten (mit bis zu 14.000 Gauss) geführt, wodurch nicht nur die Clusterbildung aufgebrochen und die Oberflächenspannung verringert wird, sondern auch die Moleküle polarisiert werden.

Vorzugsweise werden die Fluida oder Gase, insbesondere das Wasser oder der Wasserdampf, einem Magnetfeld von 8.000 bis 14.000 Gauss ausgesetzt.

Nach einer weiteren Ausgestaltung der Erfindung wird das wasserdampfhaltige, gasförmige Medium weiterhin mit unter Energiegewinn oxidierbaren Stoffen als weiteren Brennstoffen versehen. Dies sind insbesondere Kohlenwasserstoffe. Die Verdampfungsprodukte werden hierbei vom flüssigen Zustand in den dampfförmigen überführt, vorzugsweise unter Verwendung der Wärme aus den heißen Abgasen. Der Wasseranteil eines solchen Gasgemischs kann je nach Güte der Brennstoffe variieren. Gute Ergebnisse liefert ein Benzingemisch im Verhältnis Benzin zu Wasser (jeweils Volumen bezogen auf den flüssigen Zustand) von 10 bis 30 zu 80 bis 70 Vol.%, insbesondere 20 zu 80 Vol.%. Als weitere Brennstoffe können auch Reststoffe, wie gebrauchte Waschbenzine, Frittenfette, Pflanzenöle oder auch Tierfette eingesetzt werden. Überraschend kann sogar Schwefelsäure zugesetzt werden (z.B. Schwelsäure/Wasser: 30 zu 70 Vol.%).

Ohne an die Theorie gebunden sein zu wollen, wird davon ausgegangen, dass die weiteren Brennstoffe im Wärmetauscher in höherwertigere, besser verbrennbare Brenngase gekrackt werden. So ist es z.B. möglich, einen Otto-4-Takt Benzinmotor einwandfrei und sauber mit Diesel, Heizöl oder Schweröl zu betreiben. Der Wasseranteil des dem Wärmetauscher zugeführten wasserdampfhaltigen, gasförmigen Mediums beträgt dann vorteilhafterweise 50 bzw. 30 Vol.%.

Durch die Wärmebehandlung, ggf. auch durch katalytische oder sonstige Wechselwirkungen, wird weiterhin davon ausgegangen, dass der Wasserdampf zum Teil in Wasserstoff und Sauerstoff gespalten wird. Sind Kohlenwasserstoff-Verbindungen zugegen, ist davon auszugehen, dass weitere Reaktionen stattfinden, die zu Bildung von energiehaltigen Stoffen führen, wie z.B. die Bildung von Kohlenmonoxid, das im Motor vollständig zu Kohlendioxid umgesetzt wird. Auf diese Weise können der Verbrennung im Motor schlecht zugängliche Brennstoffe veredelt werden.

Es ist somit möglich, die notwendigen Brennstoffe entweder herkömmlich, anteilig oder sämtlich und damit ausschließlich über den Wärmetauscher dem Motor zuzuführen.

Wasser und weitere Brennstoffe können auch in den Wärmetauscher eingespritzt werden und müssen nicht notwendig vorher verdampft werden, wobei hierbei vorzugsweise eine Zerstäubung erfolgt und der Wärmetauscher die Verdampfung bewirkt.

Bevorzugt ist es jedoch, wenn die Verdampfung separat erfolgt und die weiteren Brennstoffe und/oder das Wasser in hierfür vorgesehenen Verdampfern durch Abgas - oder Restwärme des Motors erwärmt werden und dampfförmig abgezogen werden, ggf. auch über ein hierfür vorgesehenes, unter Druck stehendes, beheiztes Vorratsgefäß für die Gase.

Die heißen Abgase werden vorzugsweise unmittelbar nach Verlassen der Brennkammer dem Wärmetauscher zugeführt. Zum Beispiel kann der Abgaskrümmer Teil des Wärmetauschers sein.

Das Wasser wird vorteilhafterweise als destilliertes Wasser oder durch Osmose oder Ionentauscher entsalztes Wasser verwendet. Ebenso ist es auch möglich, das Wasser durch Elektrolyse teilweise zu spalten, um wasserstoffreiches Wasser als wasserdampfhaltiges, gasförmiges Medium einzusetzen und in den Wärmetauscher einzubringen.

Besonders bevorzugt ist es, wenn die geführten Flüssigkeiten und Gase wo immer möglich verwirbelt geführt werden. Hierzu können geeignet ausgebildete Leitschaufeln in die Rohre oder Leitungen eingebaut werden, welche tangentiale Prallflächen aufweisen.

Die Erfindung ist beispielhaft durch die Figuren erläutert. Es zeigen
Fig. 1 einen Rohrwärmetauscher und
Fig. 2 ein Gesamtschema der Anlage mit Rohrwärmetauscher nach Fig. 1 und zusätzlich zwei Verdampfern.

Der Wärmetauscher 1 weist ein Innenrohr 2, ein inneres Mantelrohr 3 und ein äußeres Mantelrohr 4 auf. Die innere Mantelschale 6 wird vom Innenrohr 2, das die erste Mantelschale 5 umschließt, und dem inneren Mantelrohr 3 gebildet, die äußere Mantelschale 7 vom inneren Mantelrohr 3 und dem äußeren Mantelrohr 4.

Die erste Mantelschale 5 (in diesem Fall ein Vollhohlkörper aber nicht notwendigerweise) und die äußere Mantelschale 7 des Rohrwärmetauschers sind jeweils vom heißen Abgas 10 der Wärmekraftmaschine im Gleichstrom durchströmt. Mit entgegengesetzter Laufrichtung wird das wasserhaltige Medium 11a in der inneren Mantelschale 6 geführt.

Einlass 8a, 8b, 8c und Auslass 9a, 9b, 9c des Wärmetauschers weisen jeweils einen größeren Querschnitt als die jeweilige Mantelschicht auf. Abgas 10 und wasserhaltiges Medium 11a werden tangential in Bezug auf die Laufrichtung 12 des Wärmetauschers zugeführt und abgeführt.

Die größeren Querschnitte auf der Einlassseite und die tangentiale Einleitung bewirken, dass Abgas und wasserhaltiges Medium in den Mantelschalen um die Achse des Wärmetauschers kreisen, vorzugsweise mit gegenläufiger Drehrichtung in Bezug auf das Paar Abgas - wasserhaltiges Medium.

Es tritt stark überhitzter Wasserdampf 11b aus. Die Oberfläche der Wärmetauscherflächen ist mit Ausnehmungen 12 versehen.

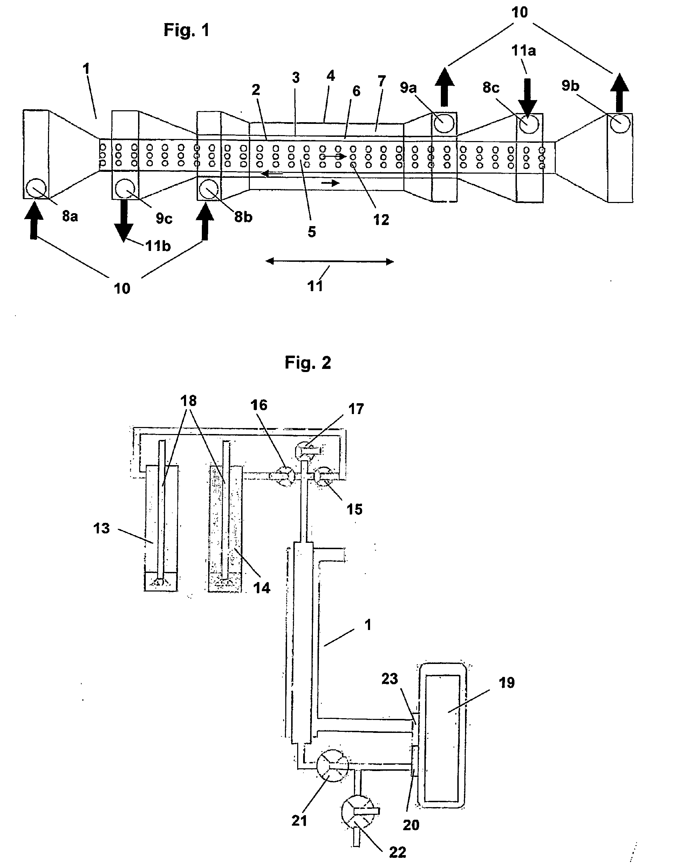

In der Fig. 2 ist das Gesamtschema der Anlage am Beispiel eines mit Benzin und Wasser betriebenen Verbrennungsmotors gezeigt. Selbstverständlich können weitere Verdampfer mit entsprechenden Brennstoffen zugeschaltet werden,

Es ist ein Verdampfer für Kohlenwasserstoffe 13, vorliegend Benzin als Brennstoff, und ein Verdampfer für Wasser 14 vorgesehen. Die Dampfraten werden durch Regelventile 15, 16, 17 gemischt bzw. dosiert und in den Wärmetauscher 1 nach Fig. 1 überführt. Die Verdampfer werden mittels Abgas oder durch das Kühlwasser des Motors beheizt (nicht gezeigt). Dabei kann durch angebrachte mechanische oder elektronische Regelkreise die gewünschte Temperatur eingestellt werden. Die Fluiddämpfe werden mit den Reglern 15,16 im geeigneten Mischungsverhältnis dem Wärmetauscher 1 zugeführt. Wenn nötig wird über den weiteren Regler 17 Frischluft zugeführt.

Die Gaszufuhr wird durch den Motor, der wie eine Gaspumpe wirkt, bewerkstelligt. Der Gasstrom bewirkt, dass über die Rohre 18 Umgebungsluft zugeführt wird und diese durch die flüssige Phase am Auslass der Rohre perlt.

Die im richtigen Mischungsverhältnis zugeführten Gasströme / Dämpfe werden in dem Wärmetauscher 1 thermisch behandelt, um dem Brennraum des Motors 19 über den Ansaugkrümmer 20 zugeführt zu werden.

Mit dem Regler 21 kann die Gaszufuhrrate bzw. die Drehzahl reguliert werden. Regler 22 stellt nochmals (falls nötig) zusätzliche Frischluft und/oder Brenngase unmittelbar vor dem Eingang zum Motor (regelbar) zur Verfügung.

Der Wärmetauscher 1 wird über den Abgaskrümmer 23 mit heißem Abgas beheizt. Das Abgas durchströmt den Wärmetauscher im Gegenstrom relativ zum wasserdampf - und brennstoffhaltigen Medium.

Selbstverständlich ist es auch möglich, auf den Verdampfer für Kohlenwasserstoffe 13 zu verzichten und die Brennstoffe ausschließlich auf herkömmliche Art und Weise, wie dies z.B. bei Otto- oder Dieselmotoren erfolgt, und/oder zusätzlich in den Motor zuzuführen,.

### Bezugszeichenliste

| | |
|---|---|
| Wärmetauscher | 1 |
| Innenrohr | 2 |
| inneres Mantelrohr | 3 |
| äußeres Mantelrohr | 4 |
| Innenrohr / erste Mantelschale/ Mantelschicht | 5 |
| innere Mantelschale/Mantelschicht | 6 |
| äußere Mantelschale/Mantelschicht | 7 |
| Einlass | 8a, 8b, 8c |
| Auslass | 9a, 9b, 9c |
| Abgas | 10 |
| wasserhaltiges Medium | 11a, 11b |
| Laufrichtung | 11 |
| Oberflächenbearbeitung | 12 |
| Verdampfer für Kohlenwasserstoffe | 13 |
| Verdampfer für Wasser | 14 |
| Regelventile | 15, 16, 17 |
| Rohre für Umgebungsluft | 18 |
| Motor | 19 |
| Ansaugkrümmer | 20 |
| Regler Gaszufuhrrate | 21 |
| Regler Frischluft | 22 |
| Abgaskrümmer | 23 |

## Patentansprüche

1. Vorrichtung für einen Brennraum, aufweisend einen Wärmetauscher (1), eine Abgaszufuhr, eine Brennluftansaugung und eine Wasserdampfquelle, **dadurch gekennzeichnet, dass** der Wärmetauscher (1)
- ein mehrwandiger Rohrwärmetauscher ist,
- wobei heißer Abgasstrom aus dem Brennraum (19) über die Abgaszufuhr und wasserhaltiges, zu erhitzendes Medium aus der Wasserdampfquelle in den Wärmetauscher (1) in separaten Mantelschichten (5,6,7) geführt sind, so dass das wasserhaltige, zu erhitzende Medium beidseits von jeweils einer Mantelschichte (5,7) enthaltend heißen Abgasstrom kontaktiert ist, und
- wobei die Brennluftansaugung mit der Mantelschicht für das wasserhaltige, zu erhitzende Medium verschaltet ist, zur Zufuhr eines wasserdampfhaltigen erhitzten, gasförmigen Mediums aus dem Wärmetauscher (1) in die Brennkammer (19), wobei
- das wasserhaltige Medium quer zur Durchströmrichtung des Rohrwärmetauschers tangential zugeführt wird, um den erhitzte Wasserdampfstrom kreisend um die Laufrichtungsachse des Rohrwärmetauschers zu führen.

2. Vorrichtung nach Anspruch 1, **dadurch gekennzeichnet, dass** alle mit heißem Abgas beschickte Mantelschichten relativ zu den mit wasserhaltigem Medium beschickten Mantelschichten im Gegenstrom betrieben sind.

3. Vorrichtung nach zumindest einem der vorhergehenden Ansprüche, **dadurch gekennzeichnet, dass** ein Rohrwärmetauscher eingesetzt wird und das Innenrohr (2), ggf. als erste Mantelschale (5) ausgeführt, als erste Mantelschicht über einen Einlass mit größerem Durchgangsquerschnitt als der mittlere Durchgangsquerschnitt des Innenrohres verfügt und das Abgas quer zur Durchströmrichtung des Rohrwärmetauschers tangential zugeführt wird.

4. Vorrichtung nach zumindest einem der vorhergehenden Ansprüche, **dadurch gekennzeichnet, dass** ein Rohrwärmetausche (1) eingesetzt wird und die äußere Mantelschicht (7) über einen Einlass (8b) mit größerem Durchgangsquerschnitt als der mittlere Durchgangsquerschnitt der äußeren Mantelschicht (7) verfügt und das Abgas quer zur Durchströmrichtung des Rohrwärmetauschers tangential zugeführt wird.

5. Vorrichtung nach zumindest einem der vorhergehenden Ansprüche, **dadurch gekennzeichnet, dass** ein Rohrwärmetauscher (1) eingesetzt wird und die mittlere Mantelschicht über einen Eintass (11a) mit größerem Durchgangsquerschnitt als der mittlere Durchgangsquerschnitt der mittleren Mantelschicht verfügt und das wasserhaltige Medium quer zur Durchströmrichtung des Rohrwärmetauschers tangential zugeführt wird.

6. Vorrichtung nach zumindest einem der vorhergehenden Ansprüche 2 bis 5, **dadurch gekennzeichnet, dass** mehr als drei Mantelschichten gegeben sind, wobei die weiteren Mantelschichten vorzugsweise einen entsprechenden Aufbau und eine entsprechende Beschickung aufweisen.

7. Vorrichtung nach zumindest einem der vorhergehenden Ansprüche, **dadurch gekennzeichnet, dass** die Mantelschichten auf einer oder beiden Oberflächen für den Wärmeaustausch Unebenheiten in Form von Vertiefungen und/oder Ausbuchtungen aufweisen.

8. Vorrichtung nach zumindest einem der vorhergehenden Ansprüche, **dadurch gekennzeichnet, dass** der Wärmetauscher (1), die Zufuhr für das wasserhaltige, gasförmige Medium und/oder das Wasser vor der Verdampfung mit einem Permanentmagneten oder Elektromagneten in Kontakt gebracht ist.

9. Vorrichtung nach zumindest einem der vorhergehenden Ansprüche, **dadurch gekennzeichnet, dass** das wasserdampfhaltige Medium zusammen mit Brennstoffen in den Wärmetauscher (1) der Brennkammer (19) zugeführt ist.

10. Verfahren zur Zufuhr eines wasserdampfhaltigen, gasförmigen Mediums über die Brennluftansaugung in den Brennraum eines Heizungsbrenners oder einer Wärmekraftmaschine, aufweisend die folgenden Schritte
- Generieren eines wasserhaltigen Mediums,
- Erhitzen des wasserhaltigen Mediums in einem mehrwandigen Rohrwärmetauscher,
- wobei heißer Abgasstrom und das wasserhaltige, zu erhitzende Medium in den Wärmetauscher in separaten Mantelschichten geführt werden, so dass das wasserhaltige, zu erhitzende Medium beidseits von jeweils einer Mantelschicht heißen Abgasstroms ohne Durchmischung mit dem jeweils anderem Medium kontaktiert ist, und
wobei die Brennluftansaugung aus der Mantelschicht für das wasserhaltige, zu erhitzende Medium heißen Wasserdampf abzieht, zur Zufuhr des Wasserdampfes, ggf. angereichert mit Brennstoffen und/oder Wasserstoff, in die Brennkammer, wobei zumindest der erhitzte Wasserdampfstrom kreisend um die Laufrichtungsachse des Rohrwärmetauschers geführt wird.

11. Verfahren nach Anspruch 10, **dadurch gekennzeichnet, dass** das erhitzte wasserhaltige Medium weiterhin Wasserstoff enthält.

12. Verfahren nach zumindest einem der Ansprüche 10 oder 11, **dadurch gekennzeichnet, dass** der erhitzter Wasserdampfstrom und der Abgasstrom kreisend um die Laufrichtungsachse des Rohrwärmetauschers (1) geführt werden jeweils mit anderer Zirkulationsrichtung in Bezug auf den jeweils anderen benachbarten Strom.

13. Verfahren nach zumindest einem der Ansprüche 10 bis 12, **dadurch gekennzeichnet, dass** die Vorrichtung nach einem der Ansprüche 1 bis 9 in dem Verfahren eingesetzt wird.

## Claims

1. Device for a combustion chamber, said device having a heat-exchanger (1), an exhaust gas feed, a combustion air intake and a water vapour source, **characterised in that** the heat-exchanger (1):
- is a multi-wall tube-type heat-exchanger;
- wherein a hot exhaust gas flow is conveyed from the combustion chamber (19) via the exhaust gas feed, and water-containing medium which is to be heated is conveyed from the water vapour source, into the heat-exchanger (1) in separate sheathing layers (5, 6, 7), so that contact with the water-containing medium which is to be heated is made on both sides of a sheathing layer (5, 7), in each case, containing a hot exhaust gas flow; and
- wherein the combustion air intake is interlinked with the sheathing layer for the water-containing medium which is to be heated, for the purpose of feeding a water vapour-containing, heated, gaseous medium from the heat-exchanger (1) into the combustion chamber (19); wherein
- the water-containing medium is fed in tangentially, transversely to the direction of through-flow of the tube-type heat-exchanger, in order to convey the heated water vapour flow in a manner circulating around the axis of the direction of operation of the tube-type heat-exchanger.

2. Device according to claim 1, **characterised in that** all the sheathing layers charged with hot exhaust gas are operated in counter-current, relative to the sheathing layers charged with water-containing medium.

3. Device according to at least one of the preceding claims, **characterised in that** a tube-type heat-exchanger is used and the inner tube (2), which is optionally designed as the first sheathing shell (5), has, as the first sheathing layer, an inlet with a larger cross-section of passage than the average cross-section of passage of said inner tube, and the exhaust gas is fed in tangentially, transversely to the direction of through-flow of the tube-type heat-exchanger.

4. Device according to at least one of the preceding claims, **characterised in that** a tube-type heat-exchanger (1) is used and the outer sheathing layer (7) has an inlet (8b) with a larger cross-section of passage than the average cross-section of passage of said outer sheathing layer (7), and the exhaust gas is fed in tangentially, transversely to the direction of through-flow of the tube-type heat-exchanger.

5. Device according to at least one of the preceding claims, **characterised in that** a tube-type heat-exchanger (1) is used and the middle sheathing layer has an inlet (11a) with a larger cross-section of passage than the average cross-section of passage of said middle sheathing layer, and the water-containing medium is fed in tangentially, transversely to the direction of through-flow of the tube-type heat-exchanger.

6. Device according to at least one of the preceding claims 2 to 5, **characterised in that** there are more than three sheathing layers, the additional sheathing layers preferably having a corresponding composition and a corresponding charge.

7. Device according to at least one of the preceding claims, **characterised in that** the sheathing layers have uneven portions in the form of depressions and/or bulges on one or both surfaces for the exchange of heat.

8. Device according to at least one of the preceding claims, **characterised in that** the heat-exchanger (1), the feed for the water-containing, gaseous medium and/or the water prior to vaporisation is/are brought into contact with a permanent magnet or electromagnets.

9. Device according to at least one of the preceding claims, **characterised in that** the water vapour-containing medium is fed, together with fuels, into the heat-exchanger (1) of the combustion chamber (19).

10. Method for feeding a water vapour-containing, gaseous medium, via the combustion air intake, into the combustion chamber of a heating burner or thermal engine, said method comprising the following steps:
- the generation of a water-containing medium;
- the heating of said water-containing medium in a multi-wall tube-type heat-exchanger;
- wherein a hot exhaust gas flow and the water-containing medium which is to be heated are fed into the heat-exchanger in separate sheathing layers, so that contact with the water-containing medium which is to be heated is made, on both sides of a sheathing layer in each case, of a hot exhaust gas flow, without intermixture with the other medium in each case; and
wherein the combustion air intake draws off, from the sheathing layer for the water-containing medium which is to be heated, hot water vapour for the purpose of feeding said water vapour, optionally enriched with fuels and/or hydrogen, into the combustion chamber, and wherein at least the heated water vapour flow is conveyed in a manner circulating around the axis of the direction of operation of the tube-type heat-exchanger.

11. Method according to claim 10, **characterised in that** the heated water-containing medium also contains hydrogen.

12. Method according to at least one of claims 10 or 11, **characterised in that** the heated water vapour flow and the exhaust gas flow are conveyed in a manner circulating around the axis of the direction of operation of the tube-type heat-exchanger (1), in each case with a different direction of circulation with respect to the other adjacent flow in each case.

13. Method according to at least one of claims 10 to 12, **characterised in that** the device according to one of claims 1 to 9 is used in the method.

## Revendications

1. Dispositif destiné à une chambre de combustion, comprenant un échangeur thermique (1), une admission de gaz d'échappement, un système d'aspiration d'air de combustion et une source de vapeur d'eau, **caractérisé en ce que** l'échangeur thermique (1)
- est un échangeur thermique tubulaire à parois multiples,
- un flux de gaz d'échappement chauds sortant de la chambre de combustion (19) et un fluide aqueux à chauffer sortant de la source de vapeur d'eau étant guidés, le premier via l'admission de gaz d'échappement, vers l'échangeur thermique (1) dans des couches d'enveloppe (5, 6, 7) séparées, de telle sorte que le fluide aqueux à chauffer est mis en contact des deux côtés avec une couche d'enveloppe (5, 7) contenant le flux de gaz d'échappement chauds, et
- le système d'aspiration d'air de combustion étant raccordé à la couche d'enveloppe pour le fluide aqueux à chauffer, afin d'acheminer un fluide gazeux chauffé, contenant de la vapeur d'eau, hors de l'échangeur thermique (1) vers la chambre de combustion (19),
- le fluide aqueux étant guidé tangentiellement, transversalement à la direction d'écoulement à travers l'échangeur thermique tubulaire, afin de guider le flux de vapeur d'eau chauffé autour de l'axe de la direction d'écoulement de l'échangeur thermique tubulaire.

2. Dispositif selon la revendication 1, **caractérisé en ce que** toutes les couches d'enveloppe alimentées en gaz d'échappement chauds sont exploitées en contre-courant par rapport aux couches d'enveloppe alimentées en fluide aqueux.

3. Dispositif selon au moins l'une quelconque des revendications précédentes, **caractérisé en ce qu'**un échangeur thermique tubulaire est installé et le tube intérieur (2) est réalisé éventuellement sous la forme d'une première enveloppe (5), en tant que première couche d'enveloppe comporte une entrée avec une section de passage supérieure à la section de passage centrale du tube intérieur, et les gaz d'échappement sont guidés tangentiellement, transversalement à la direction d'écoulement à travers l'échangeur thermique tubulaire.

4. Dispositif selon au moins l'une quelconque des revendications précédentes, **caractérisé en ce qu'**un échangeur thermique tubulaire (1) est installé et la couche d'enveloppe extérieure (7) comporte une entrée (8b) avec une section de passage supérieure à la section de passage centrale de la couche d'enveloppe extérieure (7), et les gaz d'échappement sont guidés tangentiellement, transversalement à la direction d'écoulement à travers l'échangeur thermique tubulaire.

5. Dispositif selon au moins l'une quelconque des revendications précédentes, **caractérisé en ce qu'**un échangeur thermique tubulaire (1) est installé et la couche d'enveloppe centrale comporte une entrée (11a) avec une section de passage supérieure à la section de passage centrale de la couche d'enveloppe centrale, et le fluide aqueux est acheminé tangentiellement, transversalement à la direction d'écoulement à travers l'échangeur thermique tubulaire.

6. Dispositif selon l'une au moins quelconque des revendications 2 à 5, **caractérisé en ce qu'**il existe plus de trois couches d'enveloppe, les autres couches d'enveloppe ayant de préférence une structure appropriée et une alimentation appropriée.

7. Dispositif selon au moins l'une quelconque des revendications précédentes, **caractérisé en ce que** les couches d'enveloppe, sur une surface ou sur les deux surfaces, comportent des irrégularités en forme creux et/ou de bosses pour l'échange thermique.

8. Dispositif selon au moins l'une quelconque des revendications précédentes, **caractérisé en ce que** l'échangeur thermique (1), l'admission du flux gazeux contenant de l'eau et/ou l'eau avant la vaporisation sont amenés en contact avec un aimant permanent ou un électroaimant.

9. Dispositif selon au moins l'une quelconque des revendications précédentes, **caractérisé en ce que** le fluide contenant de la vapeur d'eau est acheminé conjointement avec des combustibles vers l'échangeur thermique (1) de la chambre de combustion (19).

10. Procédé d'acheminement d'un fluide gazeux, contenant de la vapeur d'eau, via un système d'aspiration d'air de combustion vers la chambre de combustion d'un brûleur de chauffage ou un moteur à énergie thermique, comportant les étapes suivantes :
- production d'un fluide aqueux,
- chauffage du fluide aqueux dans un échangeur thermique tubulaire à parois multiples,
- un flux de gaz d'échappement chauds et le fluide aqueux à chauffer étant guidés vers l'échangeur thermique (1) dans des couches d'enveloppe (5, 6, 7) séparées, de telle sorte que le fluide aqueux à chauffer est mis en contact des deux côtés avec une couche d'enveloppe contenant le flux de gaz d'échappement chauds sans être mélangé avec chacun des autres fluides, et
le système d'aspiration d'air de combustion aspirant de la vapeur d'eau chaude hors de la couche d'enveloppe pour le fluide aqueux à chauffer, afin d'acheminer la vapeur d'eau, éventuellement enrichie de combustibles et/ou d'hydrogène, vers la chambre de combustion, au moins le flux de vapeur d'eau chauffée étant guidé autour de l'axe de la direction d'écoulement de l'échangeur thermique tubulaire.

11. Procédé selon la revendication 10, **caractérisé en ce que** le fluide aqueux chauffé contient, en plus, de l'hydrogène.

12. Procédé selon au moins une des revendications 10 ou 11, **caractérisé en ce que** le flux de vapeur d'eau chauffé et le flux de gaz d'échappement sont guidés de manière rotative autour de l'axe de la direction d'écoulement de l'échangeur thermique tubulaire (1), chacun avec une autre direction de circulation par rapport à l'autre flux respectivement adjacent.

13. Procédé selon au moins l'une quelconque des revendications 10 à 12, **caractérisé en ce que** le dispositif selon l'une quelconque des revendications 1 à 9 est intégré dans le procédé.
